# EUROPÄISCHE PATENTSCHRIFT

(11) **EP 1 904 318 B1**
(45) Veröffentlichungstag und Bekanntmachung des Hinweises auf die Patenterteilung: **13.05.2009**
(21) Anmeldenummer: 06776206.2
(22) Anmeldetag: 13.07.2006
(51) Int. Cl.: B60G 7/00

(54) **LENKER FÜR EINE FAHRZEUGRADAUFHÄNGUNG MIT EINER SOLLBRUCHSTELLE**
LINK FOR A VEHICLE WHEEL SUSPENSION SYSTEM WITH A PREDETERMINED BREAKING POINT
BRAS OSCILLANT POUR UNE SUSPENSION DE ROUE DE VEHICULE, POURVU D'UN POINT DE RUPTURE PREDETERMINE

(30) Priorität: 20.07.2005 DE 102005033810
(43) Veröffentlichungstag der Anmeldung: 02.04.2008
(73) Patentinhaber: Bayerische Motoren Werke Aktiengesellschaft, 80809 München (DE)
(72) Erfinder: RUEHE, Ulrich, 81247 München (DE); REICH, Stefan, 81249 München (DE)
(86) Internationale Anmeldenummer: PCT/EP2006/006843
(87) Internationale Veröffentlichungsnummer: WO 2007/009653

(56) Entgegenhaltungen:
- EP-A- 1 312 535
- DE-A1- 4 142 587
- DE-C1- 3 800 944
- DE-C1- 19 542 496
- FR-A- 2 652 312
- US-A- 5 556 119
- US-A- 5 607 177
- US-A- 6 007 058
- US-A1- 2002 180 171
- US-B1- 6 298 962

## Beschreibung

Die Erfindung betrifft einen Lenker für eine Fahrzeugradaufhängung nach dem Oberbegriff des Hauptanspruchs.

Es ist bereits bekannt, Fahrzeugradaufhängungen mit Sollbruchstellen zu versehen. Die EP 993 382 B1 beschreibt einen Vierpunktlenker einer Starrachsenaufhängung für Lastkraftwagen, der als ein verwindbares Kreuz über jeweils zwei in Fahrzeugquerrichtung einen Abstand aufweisende Gelenke einerseits mit der Fahrzeugachse und andererseits mit dem Fahrzeugaufbau verbunden ist. Dabei weist einer der vier Arme des Vierpunktlenkers eine Sollbruchstelle auf, die so ausgelegt ist, dass bei Achsbelastungen weit oberhalb der zu erwartenden maximalen Anforderungen und damit möglicherweise verbundenen Zerstörung des Vierpunktlenkers, dies zuerst im Bereich der Sollbruchstelle und damit kontrollierbar erfolgt. Beabsichtigt wird damit, dass das Fahrzeug, weil an der Fahrzeugachse immer noch einer der beiden Vierpunktlenker befestigt ist, noch ohne Fremdunterstützung zur nächstgelegenen Werkstatt gefahren werden kann.

Die Achsbelastung rührt hierbei aus der Beladung, das heißt Überladung des Fahrzeugs. Für andere Achsbelastungen, zum Beispiel der im Falle eines Unfalls, ist diese Sollbruchstelle nicht zweckdienlich. Außerdem entstehen beim Bruch des Lenkers auf diese Weise scharfe offene Bruchflächen, die bei einem Unfall andere Bauteile beschädigen könnten.

Der nächstliegende Stand der Technik, die US 6,298,962 B1, beschreibt einen Lenker für eine Radaufhängung, dessen Ende mit einer Bohrung zur Aufnahme eines Befestigungsmittels für die Befestigung des Lenkers am Fahrzeug versehen ist und der eine Sollbruchstelle zum Versagen aufgrund von Spannungsüberhöhung durch Verformung des Fahrzeugs während eines Unfalls besitzt, die so gestaltet ist, dass das Befestigungsmittel aus der Bohrung ausbricht.

Aufgabe der Erfindung ist es, einen Lenker für eine Fahrzeugradaufhängung bereitzustellen, der sich auch bei einem schweren Unfall möglichst wenig verformt und dadurch beim Berühren anderer Fahrzeugbauteile an diesen günstig abgleiten kann. Es sollen deshalb auch möglichst keine scharfkantigen, nach außen wirksamen Bruchflächen entstehen.

Die Aufgabe wird erfindungsgemäß mit den Merkmalen des Anspruchs 1 gelöst. Weitere Ausgestaltungen der Erfindung beschreiben die Unteransprüche.

Nach der Erfindung ist ein Lenker für eine Fahrzeugradaufhängung, der im wesentlichen an einem ersten Ende mit einem Achsschenkel zur Aufnahme eines Fahrzeugrades und im wesentlichen an mindestens einem zweiten Ende mit einer Bohrung zur Aufnahme eines Befestigungsmittels für die Befestigung eines Lagers zur Verbindung des Lenkers mit einem Fahrschemel oder einer Karosserie versehen ist, wobei der Lenker eine Sollbruchstelle zum Versagen aufgrund von Spannungsüberhöhung durch Verformung des Fahrzeugs während eines Unfalls besitzt, die so gestaltet ist, dass das Befestigungsmittel aus der Bohrung ausbricht, dadurch gekennzeichnet, dass die Bohrung eine Sackgewindebohrung ist und dass das Befestigungsmittel eine Schraube ist, die in die Sackgewindebohrung eingedreht ist.

Ein Lenker mit einer solchen Befestigung ist sehr preiswert herzustellen. Die Schraube kann in einfacher Weise im wesentlichen in radialer Richtung mindestens teilweise aus der Bohrung ausbrechen, wenn vorzugsweise deren Wandung in mindestens einer radialen Richtung vom Bohrungsmittelpunkt aus von außen her, insbesondere durch mindestens eine Werkstoffausnehmung, geschwächt ist.

Durch eine solche Sollbruchstelle im Lenker ist vorteilhafter Weise gewährleistet, dass sich dieser auch bei einem schweren Unfall möglichst wenig verformt und dadurch beim Berühren anderer Fahrzeugbauteile an diesen günstig abgleiten kann. Der Lenker bleibt in seiner Form im wesentlichen erhalten, so entstehen keine scharfkantigen, nach außen wirksamen Bruchflächen.

In bevorzugten Ausführungen der Erfindung ist der Lenker durch ein Gießverfahren, insbesondere aus Leichtmetallguss, hergestellt.

Der Lenker ist vorteilhafterweise insbesondere dann besonders frei von scharfen, nach außen wirksamen scharfkantigen Bruchflächen, wenn die Werkstoffausnehmung, insbesondere durch einen Gusskern, im Lenker, insbesondere sackförmig, so gestaltet ist, dass eine Unfall bedingte Verdrehung oder Verschiebung des Lenkers, das Befestigungsmittel, insbesondere die Schraube, unter Durchbrechung der Wandung der Bohrung mindestens teilweise in die Werkstoffausnehmung hinein dreht oder schiebt.

Vorteilhafterweise kann das Versagen der Sollbruchstelle dadurch einfach eingestellt werden, dass die, insbesondere sackförmige, Werkstoffausnehmung im Lenker, in Richtung zur Bohrung hin, mechanisch, insbesondere Span abhebend, bearbeitet ist. Am einfachsten wird durch die Span abhebende Bearbeitung der Werkstoffausnehmung im Lenker die Dimension der Wandung der Bohrung, in Richtung zur Werkstoffausnehmung hin, bestimmt.

Wenn der Lenker eine Radaufhängung für ein Hinterrad ist, werden bei einem Heckaufprall die Vorteile der Erfindung besonders wirksam, wenn die Werkstoffausnehmung im wesentlichen in horizontaler Richtung, mit ihrer Öffnung zur zum Lenker zugehörigen Fahrzeugaußenseite hin gerichtet, parallel und gleich gerichtet zur Bohrung, in Fahrtrichtung gesehen insbesondere hinter der Bohrung angeordnet, verläuft.

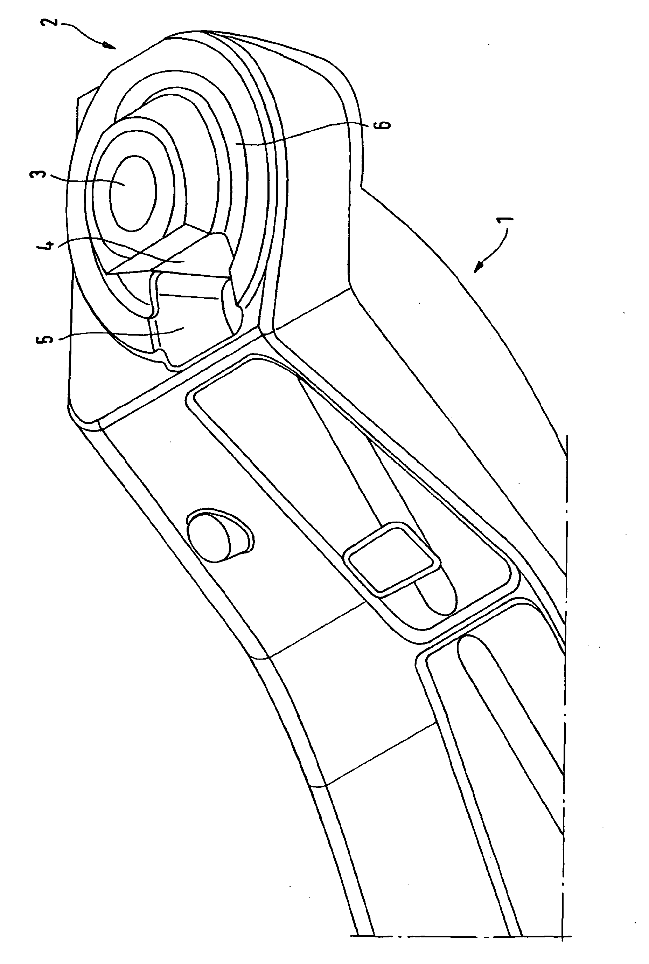

Ein bevorzugtes Ausführungsbeispiel der Erfindung ist in der nachfolgenden Beschreibung und der zugehörigen Zeichnung näher dargestellt. Die einzige Figur zeigt eine räumliche Teildarstellung eines Lenkers mit einer Sollbruchstelle gemäß der Erfindung.

Ein aus Leichtmetallguss hergestellter Längslenker 1 einer Fahrzeugradaufhängung, der an einem nicht gezeichneten ersten Ende mit einem Achsschenkel zur Aufnahme eines Fahrzeugrades und an einem zweiten Ende 2 mit einer Sackgewindebohrung 3 zur Aufnahme einer nicht gezeichneten Schraube für die Befestigung eines nicht gezeichneten Lagers zur Verbindung des Längslenkers 1 mit einem nicht gezeichneten Fahrschemel versehen ist, besitzt eine Sollbruchstelle 4 zum Versagen aufgrund von Spannungsüberhöhung durch Verformung des Fahrzeugs während eines Unfalls. Im Versagensfall bricht die Schraube im wesentlichen in radialer Richtung mindestens teilweise aus der Sackgewindebohrung 3 aus, weil die Wandung 6 der Sackgewindebohrung 3 in mindestens einer radialen Richtung vom Sackgewindebohrungsmittelpunkt aus von außen her durch mindestens eine Werkstoffausnehmung 5 geschwächt ist. Und zwar ist dazu die Werkstoffausnehmung 5 im Längslenker 1 in Richtung zur Sackgewindebohrung 3 hin, mechanisch, Span abhebend bearbeitet, zur Bestimmung der Dimension der Wandung 6 an der Sollbruchstelle 4 und damit deren Festigkeit.

Die Werkstoffausnehmung 5 ist durch einen Gusskern im Längslenker 1 sackförmig so gestaltet, dass eine Unfall bedingte Verdrehung oder Verschiebung des Längslenkers 1, die Schraube unter Durchbrechung der Wandung 6 der Sackgewindebohrung 3 an der Sollbruchstelle 4 mindestens teilweise in die Werkstoffausnehmung 5 hinein dreht oder schiebt.

Wie dargestellt, verläuft die Werkstoffausnehmung 5 für den Versagensfall eines Längslenkers 1 für ein Hinterrad, für einen Heckaufprall, besonders günstig in horizontaler Richtung, mit ihrer Öffnung zur zum Längslenker 1 zugehörigen Fahrzeugaußenseite hin gerichtet, parallel und gleich gerichtet zur Sackgewindebohrung 3, in Fahrtrichtung gesehen insbesondere hinter dieser angeordnet.

## Patentansprüche

1. Lenker für eine Fahrzeugradaufhängung, der im wesentlichen an einem ersten Ende mit einem Achsschenkel zur Aufnahme eines Fahrzeugrades und im wesentlichen an mindestens einem zweiten Ende mit einer Bohrung zur Aufnahme eines Befestigungsmittels für die Befestigung eines Lagers zur Verbindung des Lenkers mit einem Fahrschemel oder einer Karosserie versehen ist, wobei der Lenker eine Sollbruchstelle (4) zum Versagen aufgrund von Spannungsüberhöhung durch Verformung des Fahrzeugs während eines Unfalls besitzt, die so gestaltet ist, dass das Befestigungsmittel aus der Bohrung ausbricht, **dadurch gekennzeichnet, dass** die Bohrung eine Sackgewindebohrung (3) ist und dass das Befestigungsmittel eine Schraube ist, die in die Sackgewindebohrung (3) eingedreht ist.

2. Lenker für eine Fahrzeugradaufhängung nach Anspruch 1, **dadurch gekennzeichnet, dass** dieser durch ein Gießverfahren, insbesondere aus Leichtmetallguss, hergestellt ist.

3. Lenker für eine Fahrzeugradaufhängung nach einem der Ansprüche 1 oder 2, **dadurch gekennzeichnet, dass** das Befestigungsmittel im wesentlichen in radialer Richtung mindestens teilweise aus der Bohrung ausbricht.

4. Lenker für eine Fahrzeugradaufhängung nach einem der Ansprüche 1 bis 3, **dadurch gekennzeichnet, dass** die Wandung (6) der Bohrung in mindestens einer radialen Richtung vom Bohrungsmittelpunkt aus von außen her geschwächt ist.

5. Lenker für eine Fahrzeugradaufhängung nach einem der Ansprüche 1 bis 4, **dadurch gekennzeichnet, dass** die Wandung (6) der Bohrung durch mindestens eine Werkstoffausnehmung (5) geschwächt ist.

6. Lenker für eine Fahrzeugradaufhängung nach Anspruch 5, **dadurch gekennzeichnet, dass** die Werkstoffausnehmung (5), insbesondere durch einen Gusskern im Lenker sackförmig, so gestaltet ist, dass eine Unfall bedingte Verdrehung oder Verschiebung des Lenkers, das Befestigungsmittel, insbesondere die Schraube, unter Durchbrechung der Wandung (6) der Bohrung mindestens teilweise in die Werkstoffausnehmung (5) hinein dreht oder schiebt.

7. Lenker für eine Fahrzeugradaufhängung nach einem der Ansprüche 5 oder 6, **dadurch gekennzeichnet, dass** die, insbesondere sackförmige, Werkstoffausnehmung (5) im Lenker, in Richtung zur Bohrung hin, mechanisch, insbesondere Span abhebend, bearbeitet ist.

8. Lenker für eine Fahrzeugradaufhängung nach Anspruch 7, **dadurch gekennzeichnet, dass** durch die Span abhebende Bearbeitung der Werkstoffausnehmung (5) im Lenker, die Dimension der Wandung (6) der Bohrung, in Richtung zur Werkstoffausnehmung (5) hin, bestimmt wird.

9. Lenker für eine Fahrzeugradaufhängung nach einem der Ansprüche 5 bis 8, **dadurch gekennzeichnet, dass** die Werkstoffausnehmung (5) im wesentlichen in horizontaler Richtung, mit ihrer Öffnung zur zum Lenker zugehörigen Fahrzeugaußenseite hin gerichtet, parallel und gleich gerichtet zur Bohrung, in Fahrtrichtung gesehen insbesondere hinter der Bohrung angeordnet, verläuft.

## Claims

1. A suspension link for a vehicle wheel suspension, which is provided substantially at a first end with a steering knuckle to receive a vehicle wheel and, substantially at least at a second end, with a bore to receive a fastening means to fasten a bearing to connect the suspension link to a suspension subframe or a body, the suspension link having a desired breaking point (4) to fail because of a strain overload by deformation of the vehicle during an accident, said desired breaking point being designed in such a way that the fastening means break out of the bore, **characterised in that** the bore is a threaded blind bore (3) and **in that** the fastening means is a screw, which is screwed into the threaded blind bore (3).

2. A suspension link for a vehicle wheel suspension according to claim 1, **characterised in that** the latter is produced by a casting method, more especially from a light metal casting.

3. A suspension link for a vehicle wheel suspension according to either of claims 1 or 2, **characterised in that** the fastening means at least partially breaks out from the bore substantially in the radial direction.

4. A suspension link for a vehicle wheel suspension according to any one of claims 1 to 3, **characterised in that** the wall (6) of the bore is weakened from the outside in at least one radial direction from the bore centre point.

5. A suspension link for a vehicle wheel suspension according to any one of claims 1 to 4, **characterised in that** the wall (6) of the bore is weakened by at least one material recess (5).

6. A suspension link for a vehicle wheel suspension according to claim 5, **characterised in that** the material recess (5) is designed in a bag shape, more especially by a casting core in the suspension link in such a way that a rotation or displacement of the suspension link caused by an accident turns or pushes the fastening means, more especially the screw, at least partially into the material recess (5), while breaking through the wall (6) of the bore.

7. A suspension link for a vehicle wheel suspension according to either of claims 5 or 6, **characterised in that** the, more especially, bag-shaped material recess (5) in the suspension link is mechanically machined, more especially in a material-removing manner, in the direction toward the bore.

8. A suspension link for a vehicle wheel suspension according to claim 7, **characterised in that** owing to the material-removing machining of the material recess (5) in the suspension link, the dimension of the wall (6) of the bore is determined in the direction of the material recess (5).

9. A suspension link for a vehicle wheel suspension according to any one of claims 5 to 8, **characterised in that** the material recess (5) runs substantially in the horizontal direction, with its opening directed toward the outside of the vehicle associated with the suspension link, in parallel and identically oriented with respect to the bore, viewed in the direction of travel, more especially arranged behind the bore.

## Revendications

1. Bras oscillant de suspension de roue de véhicule dont essentiellement au moins la première extrémité comporte un bras d'essieu pour recevoir une roue du véhicule et essentiellement au moins à une seconde extrémité, il est prévu un perçage pour recevoir un moyen de servant à la fixation d'un palier afin de relier le bras à un faux châssis ou à la carrosserie,
le bras d'essieu a un point de rupture de consigne (4) pour se rompre sous l'effet d'une augmentation de la tension par déformation du véhicule en cas d'accident, et permettre au moyen de fixation de s'arracher du perçage,
**caractérisé en ce que**
le perçage est un taraudage borgne (3), et
le moyen de fixation est une vis logée dans le taraudage borgne (3).

2. Bras oscillant de suspension de roue de véhicule selon la revendication 1,
**caractérisé en ce qu'**
il est réalisé par un procédé de fonte notamment une fonte de métal léger.

3. Bras oscillant de suspension de roue de véhicule selon la revendication 1 ou 2,
**caractérisé en ce que**
le moyen de fixation se déchire principalement dans la direction radiale au moins partiellement à partir du perçage.

4. Bras oscillant de suspension de roue de véhicule selon les revendications 1 à 3,
**caractérisé en ce que**
la paroi (6) du perçage est affaiblie dans au moins une direction radiale à partir du centre du perçage, à partir de l'extérieur.

5. Bras oscillant de suspension de roue de véhicule selon les revendications 1 à 4,
**caractérisé en ce que**
la paroi (6) du perçage est affaiblie par au moins une cavité dans la matière (5).

6. Bras oscillant de suspension de roue de véhicule selon la revendication 5,
**caractérisé en ce que**
la cavité dans la matière (5) est réalisée sous la forme d'une poche notamment par un noyau de fonte dans le bras qui, en cas de torsion ou de coulissement du bras occasionnés par un accident, permet au moyen de fixation, notamment à la vis, de pénétrer par rotation ou coulissement dans la cavité dans la matière (5) en rompant ou au moins en partie la paroi (6) du perçage.

7. Bras oscillant de suspension de roue de véhicule selon la revendication 5 ou 6,
**caractérisé en ce que**
la cavité dans la matière (5) notamment en forme de poche du bras est usinée en direction du perçage de manière mécanique, notamment par enlèvement de copeaux.

8. Bras oscillant de suspension de roue de véhicule selon la revendication 7,
**caractérisé en ce que**
l'usinage par enlèvement de copeaux de la cavité dans la matière (5) du bras détermine la dimension de la paroi (6) du perçage en direction de la cavité de matière (5).

9. Bras oscillant de suspension de roue de véhicule selon les revendications 5 à 8,
**caractérisé en ce que**
la cavité dans la matière (5) est dirigée pratiquement dans la direction horizontale avec son ouverture tournée vers le côté extérieur du véhicule appartenant au bras, de façon parallèle et dans le même sens que le perçage vu dans la direction de déplacement, notamment derrière le perçage.
